Europäisches Patentamt

European Patent Office

Office européen des brevets

(11) Veröffentlichungsnummer: **0 319 672**
**A1**

## (12) EUROPÄISCHE PATENTANMELDUNG

(21) Anmeldenummer: **88116912.2**

(22) Anmeldetag: **12.10.88**

(51) Int. Cl.4: **H04M 1/00 , H04M 11/00**

(30) Priorität: **27.11.87 DE 3740190**

(43) Veröffentlichungstag der Anmeldung:
**14.06.89 Patentblatt 89/24**

(84) Benannte Vertragsstaaten:
**AT BE CH DE ES FR GB GR IT LI LU NL SE**

(71) Anmelder: **Lang, Günter**
**Bahnhofstrasse 7**
**D-8952 Marktoberdorf(DE)**

(72) Erfinder: **Lang, Günter**
**Bahnhofstrasse 7**
**D-8952 Marktoberdorf(DE)**

(74) Vertreter: **Hutzelmann, Gerhard**
**Duracher Strasse 22**
**D-8960 Kempten(DE)**

(54) Einrichtung zum Beeinflussen von elektrischen Geräten.

(57) Bei einer Einrichtung zum Beeinflussen von elektrischen Geräten in Abhängigkeit von der Benutzung eines Telefonapparates ist am Telefonapparat (1) ein Schalter (4) und am Telefonhörer (2) ein Magnet (3) angeordnet. Beim Abheben des Hörers betätigt der Magnet den Schalter, der über eine Schalteinrichtung das elektrische Gerät aus oder wenigstens leise schaltet.

Fig.1

EP 0 319 672 A1

## Einrichtung zum Beeinflussen von elektrischen Geräten

Die Erfindung betrifft eine Einrichtung zum Beeinflussen von elektrischen Geräten in Abhängigkeit von der Benutzung eines Telefonapparates.

In Büroräumen werden vielfach Lärm verursachende Geräte benutzt, deren Geräusch beim Telefonieren stört. Darüber hinaus ist es in vielen Betrieben üblich, während der Arbeit Musik od. dgl. zu hören. Auch diese kann beim Telefonieren erheblich stören.

Der Erfindung liegt daher die Aufgabe zugrunde, eine Einrichtung der genannten Art zu schaffen, mit welcher diese Beeinträchtigungen des Telefonierens beseitigt werden.

Diese Aufgabe wird erfindungsgemäß dadurch gelöst, daß am Telefonapparat ein vom Telfonhörer betätigter Schalter vorgesehen ist, der in einem Schaltkreis eines Leistungsschalters angeordnet ist, der seinerseits ein elektrisches Gerät ein- oder ausschaltet.

Dieser Schalter kann nachträglich und ohne jede Veränderung am Telefonapparat angebracht werden, so daß dieser in seiner Funktion nicht beeinflußt wird. Damit ist gewährleistet, daß gleichzeitig mit dem Abnehmen des Telefonhörers und Zuschalten des externen Gesprächpartners alle störenden Geräte aus- bzw. geräuscharm geschaltet werden.

Sehr vorteilhaft ist es dabei, wenn erfindungsgemäß am Telefonapparat ein magnetisch beeinflußter Schalter und am Telefonhörer ein Magnet angeordnet ist.

Desgleichen kann auch ein Induktionsschalter am Telefonapparat und ein Eisenteil am Telefonhörer angeordnet sein.

Bei beiden Ausgestaltungen ist für die Betätigung des Schalters keine direkte Berührung von Telefonapparat und Telefonhörer notwendig.

Eine vorteilhafte Ausgestaltung der Erfindung liegt darin, daß eine Stecker-Steckdosen-Kombination vorgesehen ist, in deren gemeinsamen Gehäuse der Leistungsschalter sowie dessen Stromversorgungseinrichtung vorgesehen ist und an die ber ein flexibles Kabel der vom Telefonhörer betätigte Schalter angeschlossen ist.

Hiermit ist eine besonders einfach und rationell aufgebaute Einrichtung zum Beeinflussen elektrischer Geräte geschaffen.

Ein Ausführungsbeispiel der Erfindung ist in der Zeichnung veranschaulicht. Dabei zeigen:

Fig. 1 eine schematische Ansicht eines Telefonapparates und daran angebrachter Einrichtung zum Beeinflussen eines elektrischen Gerätes und

Fig. 2 einen Schaltplan der Einrichtung

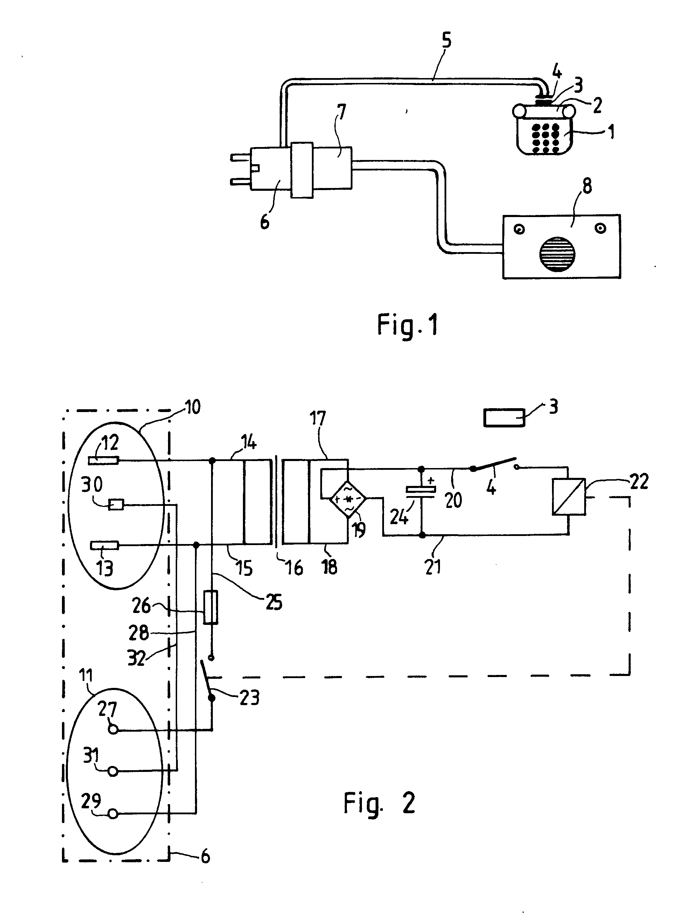

Mit 1 ist in Fig. 1 ein Telefonapparat bezeichnet, auf dem ein Telefonhörer 2 aufliegt. An diesem Telefonhörer 2 ist ein kleiner Dauermagnet 3 angeklebt, während sich am Telefonapparat im Einflußbereich dieses Magneten ein magnetisch betätigbarer Schalter 4 befindet. Dieser Schalter 4 ist über ein flexibles Kabel 5 mit einer Stecker-Steckdosen-Kombination 6 verbunden, in deren Steckdosenteil der Stecker 7 eines Radiogerätes 8 steckt.

Im Schaltplan gemäß Fig. 2 ist der Steckerteil der Stecker-Steckdosen-Kombination 6 mit 10 und der Steckdosenteil mit 11 bezeichnet. An die Stecker 12,13 des Steckerteiles 10 ist über zwei Leitungen 14,15 die Primärwicklung eines Transformators 16 angeschlossen, dessen Sekundärwicklung über zwei Leitungen 17,18 mit den Wechselstromanschlüssen eines Brückengleichrichters 19 verbunden ist. An den beiden Gleichstromanschlüssen dieses Gleichrichters 19 liegen zwei Leitungen 20 und 21, welches die Anschlußleitungen der Magnetspule 22 eines Leistungsschalters 23 sind. In der Anschlußleitung 20 ist darüber hinaus ein magnetisch betätigbarer Schalter 4 angeordnet, dem der Magnet zugeordnet ist.

Die beiden Leitungen 20 und 21 sind noch mit einem Elektrolytkondensator 24 verbunden, welcher der Siebung der vom Gleichrichter 19 erzeugten Gleichspannung dient.

Die Leitung 14 ist über eine Leitung 25 - in der eine Sicherung 26 und der Leistungsschalter 23 angeordnet sind - mit dem einen Kontakt 27 des Steckdosenteils 11 verbunden, während die Leitung 15 über eine Leitung 28 direkt mit dem anderen Kontakt 29 des Steckdosenteils 11 in Verbindung steht.

Beide Teile 10 und 11 sind noch mit einem Schutzkontakt 30 bzw. 31 versehen, die beide über eine Leitung 32 verbunden sind.

**Ansprüche**

1. Einrichtung zum Beeinflussen von elektrischen Geräten in Abhängigkeit von der Benutzung eines Telefonapparates, **dadurch gekennnzeichnet,** daß am Telefonapparat(1) ein vom Telefonhörer(2) betätigter Schalter(4) vorgesehen ist, der in einem Schaltkreis eines Leistungsschalters(22,23) angeordnet ist, der seinerseits ein elektrisches Gerät(8) ein- oder ausschaltet.

2. Einrichtung nach Anspruch 1, **dadurch gekennzeichnet,** daß am Telefonapparat(1) ein magnetisch beeinflußter Schalter(4) und am Telefonhörer ein Magnet(3) angeordnet ist.

3. Einrichtung nach Annspruch 1, **dadurch gekennzeichnet,** daß am Telefonapparat(1) ein induktiv beeinflußter Schalter und am Telefonhörer(2) ein Eisenteil vorgesehen ist.

4. Einrichtung nach Anspruch 1, 2 oder 3, **dadurch gekennzeichnet,** daß eine Stecker-Steckdosen-Kombination(6) vorgesehen ist, in deren gemeinsamen Gehäuse der Leistungsschalter-(22,23)sowie dessen Stromversorgungseinrichtung vorgesehen ist und an die über ein flexibles Kabel-(5) der vom Telefonhörer(2) betätigte Schalter(4) angeschlossen ist.

Fig. 1

Fig. 2

| | Europäisches Patentamt | EUROPÄISCHER RECHERCHENBERICHT | Nummer der Anmeldung |
|---|---|---|---|
| | | | EP 88 11 6912 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRATCS OF JAPAN, Band 10, Nr. 179 (E-414)[2235], 24. Juni 1986; & JP-A-61 28 261 (TAKEHISA YASHIMA) 07-02-1986 <br> * Zusammenfassung * <br> --- | 1 | H 04 M 1/00 <br> H 04 M 11/00 |
| Y | WO-A-8 603 353 (WARRACK et al.) <br> * Seite 5, Zeile 1 - Seite 10, Zeile 15; Figuren 1-4 * <br> --- | 1-3 | |
| Y | DE-A-3 616 314 (KRONE et al.) <br> * Spalte 4, Zeile 27 - Spalte 7, Zeile 59; Figuren 4,5 * <br> --- | 1-3 | |
| A | US-A-4 425 477 (MAGIL) <br> * Spalte 3, Zeile 44 - Spalte 5, Zeile 46; Spalte 6, Zeile 55 - Spalte 7, Zeile 54; Figuren 1-3 * <br> --- | 1-3 | |
| A | EP-A-0 027 188 (KRONE GmbH) <br> * Seite 2, Zeile 14 - Seite 3, Zeile 10; Figuren 1,2 * <br> ----- | 2,3 | **RECHERCHIERTE SACHGEBIETE (Int. Cl.4)** <br><br> H 04 M <br> H 03 G |

Der vorliegende Recherchenbericht wurde für alle Patentansprüche erstellt

| Recherchenort | Abschlußdatum der Recherche | Prüfer |
|---|---|---|
| DEN HAAG | 03-03-1989 | DELANGUE P.C.J.G. |